# EUROPEAN PATENT APPLICATION

(11) **EP 3 573 393 A1**
(43) Date of publication of application: **27.11.2019**
(21) Application number: 17892265.4
(22) Date of filing: 12.12.2017
(51) Int. Cl.: H04W 72/02, H04W 52/18, H04W 84/10

(54) **COMMUNICATION DEVICE, COMMUNICATION METHOD AND PROGRAM**

(30) Priority: 20.01.2017 JP 2017008779
(71) Applicant: Alps Alpine Co., Ltd., Tokyo 145-8501 (JP)
(72) Inventor: YABATA Tetsuya, Tokyo 145-8501 (JP)
(74) Representative: Maiwald Patent- und Rechtsanwaltsgesellschaft mbH
(86) International application number: PCT/JP2017/044496
(87) International publication number: WO 2018/135185

(57) **Abstract**

If the number of non-interference channels not subject to interference in both a master communication device 1 and a slave communication device 2 does not reach a minimum necessary number, at least one channel subject to interference only in the communication device 1 or the communication device 2 having a lower transmission power is selected as at least a part of a group of channels to be used for frequency hopping. That is, a channel subject to interference only in a device having a lower transmission power is used for communication. The device having a lower transmission power has a larger received signal strength indicator of a radio wave transmitted from a partner than the device having a larger transmission power, and thus is more unlikely to be influenced by interference due to external radio waves or the like. Accordingly, degradation of the communication quality is likely to be suppressed in a case of being subject to interference due to external radio waves or the like.

## Description

### Technical Field

The present invention relates to a communication device that performs communication by using a plurality of channels to which different frequency bands are allocated, and relates to, for example, a communication device that performs communication by using a spread spectrum of frequency hopping or the like.

### Background Art

One of communication standards for near-field communication is a communication standard called Bluetooth (registered trademark). In this communication standard, communication (wireless communication) is performed by frequency hopping using the 2.4 GHz industrial, scientific and medical (ISM) band. Specifically, continuous frequency bands from 2.402 to 2.480 GHz are divided into 79 channels each having a bandwidth of 1 MHz, and the channels used for communication are switched every 625 µs.

The 2.4 GHz ISM band is used for wireless LAN, microwave oven, and other devices conforming to IEEE 802.11. Thus, radio waves generated in these devices may interfere with the communication using the above-described standard. Accordingly, version 1.2 of the above-described communication standard introduces improved frequency hopping called adaptive frequency hopping (AFH). In AFH, frequency hopping is performed to temporarily avoid a channel subject to interference (see the following PTLs 1 to 3).

### Citation List

### Patent Literature

PTL 1: Japanese Unexamined Patent Application Publication No. 2013-529431
PTL 2: Japanese Unexamined Patent Application Publication No. 2005-303379
PTL 3: Japanese Unexamined Patent Application Publication No. 2006-287714

### Summary of Invention

### Technical Problem

The way of being subject to interference due to radio waves of a wireless LAN or the like differs according to the location of a communication device. That is, a channel subject to interference in a communication device may be different from a channel subject to interference in another communication device. Thus, it is desirable for AFH to select a channel not subject to interference in both communication devices. In a case where a channel not subject to interference in both communication devices is selected, however, the channel subject to interference only in one of the communication devices cannot be selected, and thus, the number of selectable channels is likely to be small. In the above-described communication standard, a minimum necessary number of channels to be used for frequency hopping is defined as "20". Accordingly, in a case where the number of channels not subject to interference in both communication devices becomes smaller than 20, a channel subject to interference has to be used for frequency hopping too. If the channel subject to interference is used, retransmission as a result of an error tends to occur, degrading the communication quality.

The present invention has been made in view of the above circumstances, and an object thereof is to provide a communication device that can suppress degradation of the communication quality even in a case of being subject to interference due to external radio waves or the like, a communication method therefor, and a program.

### Solution to Problem

A first aspect of the present invention relates to a communication device that performs communication by using a group of channels to which different frequency bands are allocated. The communication device includes: a channel identifying unit that identifies the channel not subject to interference in a subject device, among a plurality of the channels that are available for communication; a first information acquiring unit that acquires channel information about the channel not subject to interference in a communication partner; and a channel group selecting unit that selects, as the group of channels, a predetermined number of the channels or more on the basis of the channel identified by the channel identifying unit and the channel information acquired by the first information acquiring unit. The channel group selecting unit selects at least one of the channels not subject to interference in both the subject device and the communication partner as at least a part of the group of channels and, if the number of the channels not subject to interference in both the subject device and the communication partner does not reach the predetermined number, further selects at least one of the channels subject to interference only in the subject device or the communication partner having a lower transmission power, as at least a part of the group of channels.

According to this configuration, if the number of the channels not subject to interference in both the subject device and the communication partner does not reach the predetermined number, the at least one of the channels subject to interference only in the subject device or the communication partner having a lower transmission power is selected as at least a part of the group of channels. That is, the channel subject to interference only in a device having a lower transmission power is used for communication. The device having a lower transmission power has a larger received signal strength indicator of a radio wave transmitted from the partner than the device having a larger transmission power, and thus is more unlikely to be influenced by interference due to external radio waves or the like. The channel subject to interference only in the device having a lower transmission power is more unlikely to be influenced by external radio waves or the like than the channel subject to interference only in the device having a higher transmission power and the channel subject to interference in both. Accordingly, degradation of the communication quality is likely to be suppressed in a case of being subject to interference due to external radio waves or the like.

Preferably, the above communication device may further include: a second information acquiring unit that acquires transmission power information about the transmission power of the communication partner. On the basis of comparison between the transmission power of the communication partner indicated by the transmission power information and the transmission power of the subject device, the channel group selecting unit may determine a high-and-low relationship of the transmission power between the subject device and the communication partner.

According to this configuration, on the basis of comparison between the transmission power of the communication partner indicated by the transmission power information and the transmission power of the subject device, the high-and-low relationship of the transmission power between the subject device and the communication partner is determined. Accordingly, even if the high-and-low relationship of the transmission power is changed according to the communication partner, degradation of the communication quality is likely to be suppressed in a case of being subject to interference due to external radio waves or the like.

Preferably, the above communication device may further include: a transmission power control unit that performs control to increase the transmission power of at least one of the subject device and the communication partner if the at least one of the channels subject to interference is selected by the channel group selecting unit as a part of the group of channels.

According to this configuration, even if the channel subject to interference is selected as a part of the group of channels, by increasing the transmission power of at least one of the subject device and the communication partner, the received signal strength indicator in at least the other of the subject device and the communication partner is increased, and it is more unlikely to be subject to interference due to external radio waves or the like.

Preferably, if, after the control has been performed to increase the transmission power, the channel subject to interference is no longer included in the group of channels selected by the channel group selecting unit, the transmission power control unit may perform control to restore the transmission power of the at least one of the subject device and the communication partner.

According to this configuration, if the channel subject to interference is no longer included in the group of channels, the transmission power that has been increased is restored. Accordingly, the power consumption of the subject device is reduced as compared with a case where the transmission power remains to be increased.

Preferably, if at least a part of a plurality of channels subject to interference in the subject device or the communication partner having a higher transmission power is continuous as a frequency band, the channel group selecting unit may exclude the channels that are adjacent to the continuous channel from the group of channels.

According to this configuration, if at least a part of the plurality of channels subject to interference in the device having a higher transmission power is continuous as the frequency band, the continuous frequency band may be subject to interference due to a radio signal of a wireless LAN or the like. In this case, the channels that are adjacent to the continuous frequency band are likely to be influenced by the radio signal or the like. Accordingly, by excluding the adjacent channels from the group of channels, it can be more unlikely to be subject to interference due to a radio signal or the like.

Preferably, if the number of the channels not subject to interference in both the subject device and the communication partner does not reach the predetermined number, the channel group selecting unit may select the channels that are adjacent, more preferentially than the channel subject to interference in the subject device or the communication partner.

According to this configuration, if the number of the channels not subject to interference in both the subject device and the communication partner does not reach the predetermined number, the adjacent channels are selected as the group of channels more preferentially than the channel subject to interference in the subject device or the communication partner. Although the adjacent channels may be influenced by a radio signal or the like, the degree of interference is comparatively small. Accordingly, by selecting the adjacent channels as the group of channels more preferentially, it is more likely to suppress degradation of the communication quality.

Preferably, the above communication device may further include: a communication control unit that sets an order of the group of channels and performs control to switch the channels to be used for communication in accordance with the set order in every predetermined time.

According to this configuration, the order is set for the group of channels, and channels to be used for communication are switched in accordance with the order in every predetermined time.

A second aspect of the present invention relates to a communication method performed by a communication device that performs communication by using a group of channels to which different frequency bands are allocated. The communication method includes: a channel identifying step of identifying the channel not subject to interference in a subject device, among a plurality of the channels that are available for communication; a first information acquiring step of acquiring channel information about the channel not subject to interference in a communication partner; and a channel group selecting step of selecting, as the group of channels, a predetermined number of the channels or more on the basis of the channel identified in the channel identifying step and the channel information acquired in the first information acquiring step. In the channel group selecting step, at least one of the channels not subject to interference in both the subject device and the communication partner is selected as at least a part of the group of channels and, if the number of the channels not subject to interference in both the subject device and the communication partner does not reach the predetermined number, at least one of the channels subject to interference only in the subject device or the communication partner having a lower transmission power is further selected as at least a part of the group of channels.

Preferably, the above communication method may further include: a second information acquiring step of acquiring transmission power information about the transmission power of the communication partner. On the basis of comparison between the transmission power of the communication partner indicated by the transmission power information and the transmission power of the subject device, in the channel group selecting step, a high-and-low relationship of the transmission power between the subject device and the communication partner is determined.

Preferably, the above communication method may further include: a transmission power control step of performing control to increase the transmission power of at least one of the subject device and the communication partner if the at least one of the channels subject to interference is selected as a part of the group of channels in the channel group selecting step.

Preferably, if at least a part of a plurality of channels subject to interference in the subject device or the communication partner having a higher transmission power is continuous as a frequency band, in the channel group selecting step, the channels that are adjacent to the continuous channel may be excluded from the group of channels.

A third aspect of the present invention relates to a program causing a computer to execute the above communication method.

### Advantageous Effects of Invention

According to the present invention, degradation of the communication quality can be suppressed even in a case of being subject to interference due to external radio waves or the like.

### Brief Description of Drawings

[Fig. 1] Fig. 1 is a diagram illustrating an example of a configuration of communication devices according to a first embodiment.
[Fig. 2] Fig. 2 is a diagram for describing a method of selecting a group of channels to be used for frequency hopping in a communication device according to the first embodiment.
[Fig. 3] Fig. 3 is a flowchart for describing an example of a process of a channel identifying step in the communication device according to the first embodiment.
[Fig. 4] Fig. 4 is a flowchart for describing an example of a process of a first information acquiring step and a second information acquiring step in the communication device according to the first embodiment.
[Fig. 5] Fig. 5 is a flowchart for describing an example of a process of a channel group selecting step in the communication device according to the first embodiment.
[Fig. 6] Fig. 6 is a diagram illustrating an example of a configuration of communication devices according to a second embodiment.
[Fig. 7] Fig. 7 is a flowchart for describing an example of a process of a channel group selecting step and a transmission power control step in a communication device according to the second embodiment.
[Fig. 8] Fig. 8 is a diagram for describing a method of selecting a group of channels to be used for frequency hopping in a communication device according to a third embodiment.
[Fig. 9] Fig. 9 is a flowchart for describing an example of a process of a channel group selecting step in the communication device according to the third embodiment.
[Fig. 10] Fig. 10 is a diagram for describing a modification of the method of selecting a group of channels to be used for frequency hopping in the communication device according to the third embodiment.
[Fig. 11] Fig. 11 is a flowchart for describing a modification of the process of the channel group selecting step in the communication device according to the third embodiment.

### Description of Embodiments

### <First Embodiment>

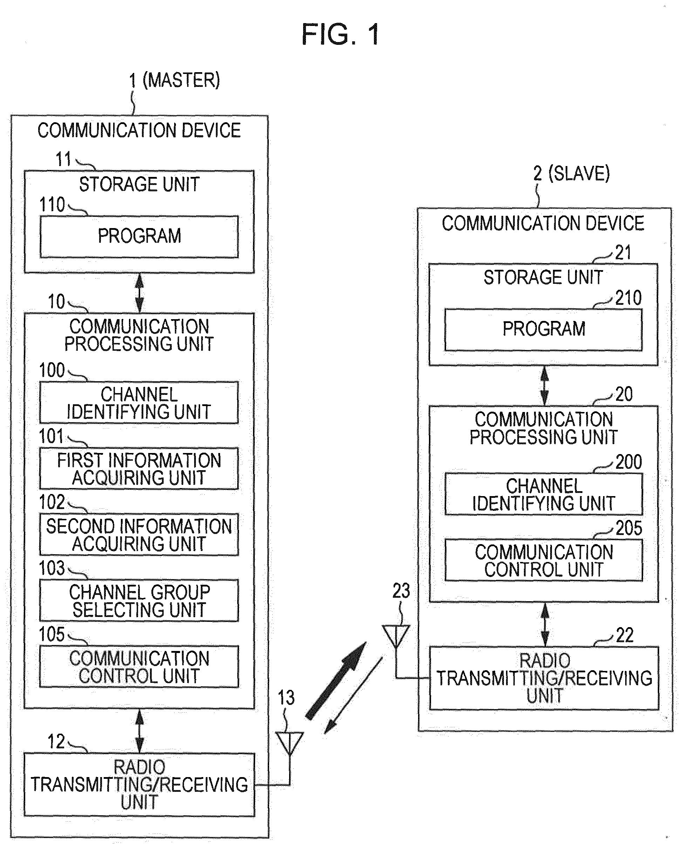

Fig. 1 illustrates an example of a configuration of communication devices 1 and 2 according to a first embodiment of the present invention. The communication devices 1 and 2 perform communication by frequency hopping using a group of channels to which different frequency bands are allocated. As an example, the communication devices 1 and 2 perform communication conforming to a communication standard called Bluetooth (registered trademark). For example, the communication devices 1 and 2 include an electronic device that has a communication function conforming to this communication standard and a communication module that controls the communication function conforming to this communication standard in various electronic devices.

As illustrated in Fig. 1, the communication device 1 serves as a master device that establishes a connection (wireless communication connection) whereas the communication device 2 serves as a slave device that is to be connected. In this embodiment, the communication device 1 is a communication device corresponding to a subject device in the present invention whereas the communication device 2 is a communication device corresponding to a communication partner in the present invention. Note that the communication device 1 is mounted in, for example, a car navigation device, an audio device, a personal computer, and the like. The communication device 2 is mounted in, for example, a smartphone, a tablet, a wearable device, and the like.

In the above-described communication standard, three classes are defined in accordance with the transmission power. The transmission power of class 1 is the highest (100 mW), the transmission power of class 2 is intermediate (10 mW), and the transmission power of class 3 is the lowest (1 mW). As a criterion, a radio wave travels 100 m in class 1, 10 m in class 2, and 1 m in class 3. Typically, a device that operates with a battery (e.g., smartphone) is set in class 2, and a device supplied with an external power supply (e.g., audio device or car navigation device) is set in class 1. Herein, as an example, the communication device 1, which is a master communication device, operates in class 1 whereas the communication device 2, which is a slave communication device, operates in class 2. That is, as illustrated by the thickness of arrows in Fig. 1, the communication device 1 can output a higher transmission power than the communication device 2.

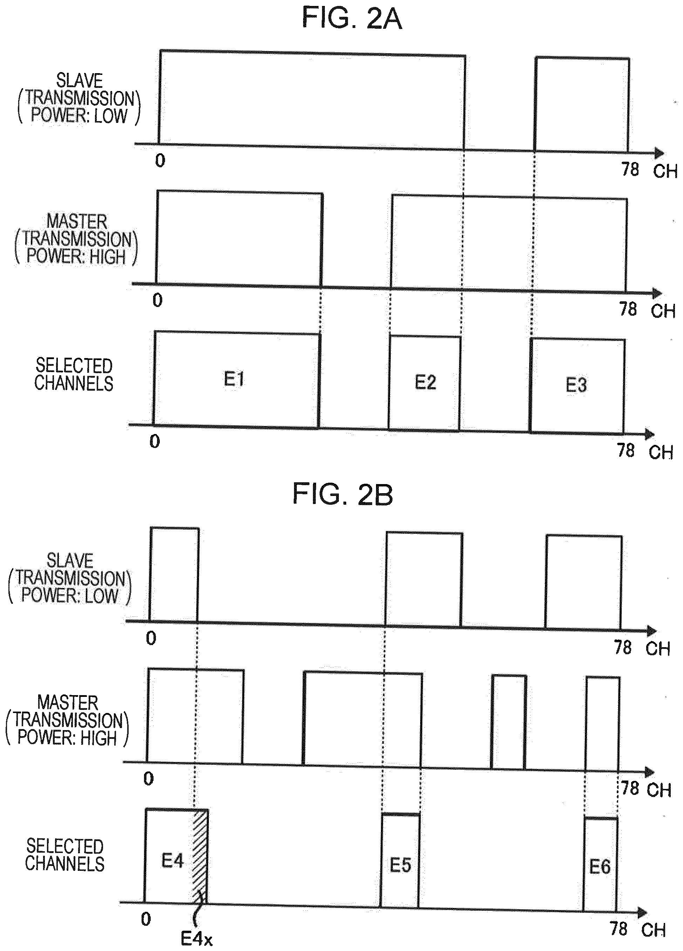

Fig. 2 is a diagram for describing a method of selecting a group of channels to be used for frequency hopping in the communication device 1 according to this embodiment. In Figs. 2A and 2B, the upper two stages illustrate channels not subject to interference among all channels (79 channels) that are available for communication of the above-described communication scheme, and the lower stage illustrates a group of channels selected for frequency hopping.

As illustrated in Fig. 2A, in this embodiment, channels not subject to interference in both the communication device 1 and the communication device 2 are selected as the group of channels. In the example in Fig. 2A, channels that belong to channel ranges E1, E2, and E3 are selected as the group of channels. In the example in Fig. 2A, the number of channels selected as the group of channels (E1 to E3) is larger than the minimum necessary number (20 channels) for frequency hopping defined by the above-described communication scheme.

On the other hand, in the example in Fig. 2B, the number of channels not subject to interference in both the communication device 1 and the communication device 2 is smaller than 20 channels. That is, the channels not subject to interference in both the communication devices 1 and 2 do not satisfy the minimum necessary number for frequency hopping. In this case, in this embodiment, channels corresponding to a shortfall for frequency hopping are selected from channels subject to interference only in the communication device 2 having a lower transmission power. In the example in Fig. 2B, a hatched range E4x in a channel range E4 corresponds to this. Since the transmission power of the master communication device 1 is higher, a received signal strength indicator of the slave communication device 2 is larger. Thus, by selecting the channels subject to interference only in the communication device 2 for frequency hopping, degradation of the communication quality is suppressed as compared with a case of selecting channels subject to interference only in the communication device 1 or channels subject to interference in both the communication devices 1 and 2.

In the example in Fig. 1, the communication device 1 includes a communication processing unit 10, a storage unit 11, a radio transmitting/receiving unit 12, and an antenna 13.

The radio transmitting/receiving unit 12 performs wireless communication in the 2.4 GHz band in accordance with the above-described communication scheme. Specifically, a radio transmitting/receiving unit 40 performs wireless communication by using a frequency hopping spread spectrum in which channels are switched in every slot (625 µs). The radio transmitting/receiving unit 12 performs signal processing such as modulation, frequency conversion, and power amplification on transmission data that is input from the communication processing unit 10 to generate an RF signal in the 2.4 GHz band and transmit it as a radio wave from the antenna 13. In addition, the communication processing unit 10 performs signal processing such as amplification, frequency conversion, and demodulation on the RF signal in the 2.4 GHz band as the radio wave received by the antenna 13 to generate reception data and output it to the communication processing unit 10.

The communication processing unit 10 performs various kinds of communication processing on the basis of a communication protocol of the above-described communication scheme. The communication processing unit 10 includes, for example, a computer (e.g., microprocessor) that executes a command on the basis of a program 110 stored in the storage unit 11. The communication processing unit 10 may cause the computer to execute all the processing or may cause a dedicated logic circuit to execute at least a part of the processing. In addition, the communication processing unit 10 may be formed on an IC or may be configured from a plurality of ICs.

In the example in Fig. 1, the communication processing unit 10 includes a channel identifying unit 100, a first information acquiring unit 101, a second information acquiring unit 102, a channel group selecting unit 103, and a communication control unit 105.

The channel identifying unit 100 identifies, among all channels (79 channels) that are available for frequency hopping, a channel not subject to interference (hereinafter also referred to as "non-interference channel") in the communication device 1. For example, the channel identifying unit 100 acquires, from the radio transmitting/receiving unit 12, the received signal strength indicator of each channel during a period in which communication is not performed, and determines for each channel whether the received signal strength indicator during the non-communication period is smaller than a predetermined threshold. The channel identifying unit 100 identifies a channel whose received signal strength indicator during the non-communication period is smaller than the threshold as the non-interference channel.

In addition, the channel identifying unit 100 may calculate an error rate of reception data in each channel (e.g., error detection frequency in a predetermined number of packets) to compare the error rate with a predetermined threshold. In this case, the channel identifying unit 100 identifies a channel whose error rate is smaller than the threshold as the non-interference channel.

The first information acquiring unit 101 acquires channel information about the non-interference channel in the communication device 2. For example, the first information acquiring unit 101 transmits a command "HCI_Read_AFH_Channel_Map" through a host controller interface (HCI) from an upper layer to a lower layer of a protocol stack of the above-described communication scheme. In accordance with this command, the first information acquiring unit 101 acquires, from the communication device 2, information indicating whether each channel is subject to interference (channel information) in the communication device 2.

The second information acquiring unit 102 acquires transmission power information about the transmission power of the communication device 2. For example, when starting a connection with the communication device 2, the second information acquiring unit 102 acquires information about the class of the transmission power in the communication device 2 as the transmission power information.

The channel group selecting unit 103 selects channels to be used for frequency hopping. That is, on the basis of the non-interference channel in the communication device 1 identified by the channel identifying unit 100 and the channel information about the non-interference channel in the communication device 2 acquired by the first information acquiring unit 101, the channel group selecting unit 103 selects 20 or more channels not subject to interference in both the communication device 1 and the communication device 2 as a group of channels to be used for frequency hopping.

In addition, in a case where the number of channels not subject to interference in both the communication device 1 and the communication device 2 does not reach 20 (minimum necessary number for frequency hopping), the channel group selecting unit 103 selects at least one channel subject to interference (hereinafter also referred to as "interference channel") only in the communication device 1 or the communication device 2 having a lower transmission power, as at least a part of the group of channels to be used for frequency hopping. In this embodiment, as an example, the transmission power of the communication device 1 is higher than that of the communication device 2. Thus, the channel group selecting unit 103 selects the shortfall to 20 channels, which are necessary for the group of channels, from the at least one interference channel in the communication device 2.

Note that if the high-and-low relationship of the transmission power between the communication device 1 and the communication device 2 is changeable, the channel group selecting unit 103 may determine the high-and-low relationship of the transmission power between the subject device and the communication partner on the basis of comparison between the transmission power of the communication partner indicated by the transmission power information acquired by the second information acquiring unit 102 and the transmission power of the subject device.

Upon selection of the group of channels to be used for frequency hopping, the channel group selecting unit 103 transmits a command "HCI_Set_AFH_Host_Channel_Classification" through the HCI from the upper layer to the lower layer of the protocol stack. In accordance with this command, the channel group selecting unit 103 sets the group of channels to be used for communication with the communication device 2 using frequency hopping.

The communication control unit 105 performs various kinds of processing of the lower layer (Link Layer) of the protocol stack of the above-described communication scheme. For example, as processing related to adaptive frequency hopping (AFH), the communication control unit 105 sets a pseudo-random order of the group of channels given by the command "HCI_Set_AFH_Host_Channel_Classification" and notifies the communication device 2 of the set order. The communication control unit 105 switches the channels to be used for communication with the communication device 2 every predetermined time (every 625 µs) in accordance with the set order.

In addition, as other processing related to AFH, the communication control unit 105 transmits, to the communication device 2, a command "Channel_Classification_Req" for requesting channel information at a predetermined timing and requests channel information about the presence or absence of interference in each channel from the communication device 2. Upon reception of this command, the communication device 2 transmits a reply "Channel_Classification" to the master as a response including the channel information. Upon reception of the command "HCI_Read_AFH_Channel_Map" from the first information acquiring unit 101, the communication control unit 105 provides the channel information of the communication device 2 included in "Channel_Classification" to the first information acquiring unit 101.

The storage unit 11 stores the program 110 to be executed by the computer of the communication processing unit 10, constant data to be used for communication processing of the communication processing unit 10, variable data that is temporarily stored in the process of communication processing, and the like. The storage unit 11 includes any storage device, such as a ROM, a RAM, or a flash memory. The program 110 may be stored in advance in the ROM or the like of the storage unit 11, a program downloaded from a host device (main controller) that is not illustrated may be written into the storage unit 11, or a program read in a reading device that is not illustrated, from a non-transitory tangible medium (e.g., DVD or USB memory), may be written into the storage unit 11.

In the example in Fig. 1, the communication device 2 includes a communication processing unit 20, a storage unit 21, a radio transmitting/receiving unit 22, and an antenna 23.

As in the radio transmitting/receiving unit 12 in the communication device 1, the radio transmitting/receiving unit 22 performs wireless communication in the 2.4 GHz band in accordance with the above-described communication scheme.

As in the communication processing unit 10 in the communication device 1, the communication processing unit 20 performs various kinds of communication processing on the basis of a communication protocol of the above-described communication scheme. The communication processing unit 20 includes, for example, a computer that executes a command on the basis of a program 210 stored in the storage unit 21. The communication processing unit 20 may cause the computer to execute all the processing or may cause a dedicated logic circuit to execute at least a part of the processing. In addition, the communication processing unit 20 may be formed on an IC or may be configured from a plurality of ICs.

In the example in Fig. 1, the communication processing unit 20 includes a channel identifying unit 200 and a communication control unit 205.

As in the channel identifying unit 100 described above, the channel identifying unit 200 identifies, among all channels (79 channels) that are available for frequency hopping, a non-interference channel in the communication device 2.

As in the communication control unit 105 described above, the communication control unit 205 performs various kinds of processing of the lower layer (Link Layer) of the protocol stack of the above-described communication scheme. For example, the communication control unit 205 switches the channels to be used for communication with the communication device 1 every predetermined time (every 625 µs) in accordance with the group of channels and in accordance with its order transmitted from the communication device 1. In addition, upon reception of a command (Channel_Classification_Req) for requesting channel information from the communication device 1, the communication control unit 205 transmits, as a reply to the communication device 1, channel information (Channel_Classification) based on the result identified by the channel identifying unit 200.

As in the storage unit 11 described above, the storage unit 21 stores the program 210 to be executed by the computer of the communication processing unit 20, constant data to be used for communication processing of the communication processing unit 20, variable data that is temporarily stored in the process of communication processing, and the like. The program 210 may be stored in advance in the storage unit 21, a program downloaded from a host device that is not illustrated may be written into the storage unit 21, or a program read in a reading device that is not illustrated, from a non-transitory tangible medium, may be written into the storage unit 21.

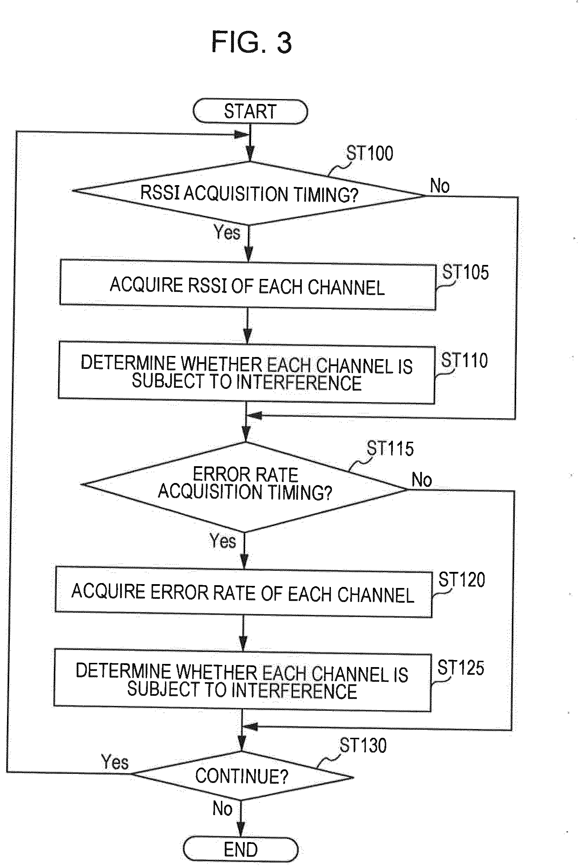

Now, operations of the communication device 1 having the above-described configuration, the operations being related to frequency hopping, will be described with reference to the flowcharts in Figs. 3 to 5.

Fig. 3 is a flowchart for describing an example of a process of a channel identifying step for identifying channels not subject to interference.

At a predetermined timing for acquiring the received signal strength indicator (RSSI) (ST100), the channel identifying unit 100 acquires the received signal strength indicator of each channel from the radio transmitting/receiving unit 12 (ST105). The timing for acquiring the received signal strength indicator may be, for example, every certain time or when the no-communication state lasts for a certain time or longer. The channel identifying unit 100 compares the received signal strength indicator of each channel or the average of the received signal strength indicators with a predetermined threshold, and determines whether each channel is subject to interference on the basis of the comparison result (ST110).

At a predetermined timing for acquiring an error rate (ST115), the channel identifying unit 100 acquires the error rate of each channel (ST120). The timing for acquiring the error rate may be, for example, every certain time or a timing at which a predetermined number of packets are received for each channel. The channel identifying unit 100 acquires, for example, the number of packets in which errors have been detected among the predetermined number of packets as the error rate. The channel identifying unit 100 compares the error rate of each channel with a predetermined threshold, and determines whether each channel is subject to interference on the basis of the comparison result (ST125). While the communication operation is continued without transition to a sleep mode or the like, the channel identifying unit 100 repeats the process in steps ST100 to S125 (ST130).

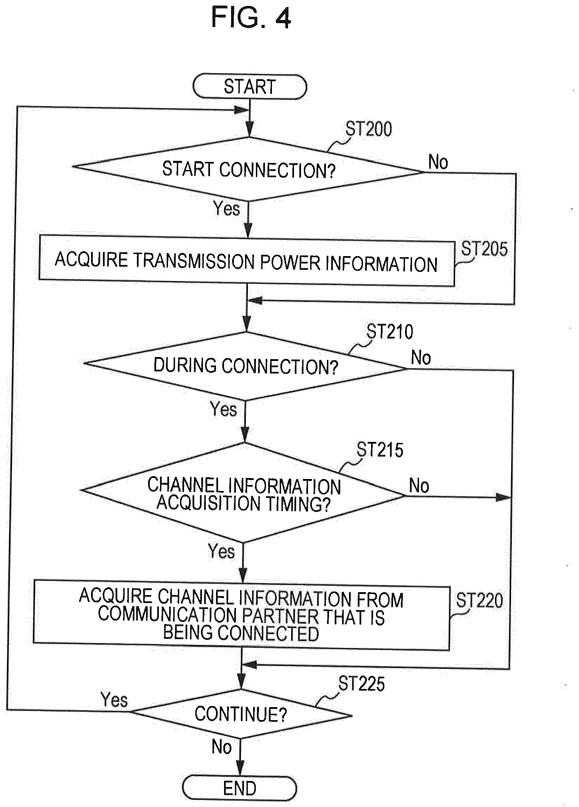

Fig. 4 is a flowchart for describing an example of a process of a first information acquiring step for acquiring channel information and a second information acquiring step for acquiring transmission power information.

First, in response to the communication device 1 starting a connection with the communication device 2 (ST200), the second information acquiring unit 102 acquires information on the class of the transmission power as the transmission power information from the communication device 2 (ST205). In addition, at a predetermined timing for acquiring the channel information during the connection between the communication device 1 and the communication device 2 (ST210, ST215), the first information acquiring unit 101 acquires the channel information from the communication device 2 that is being connected (ST220). The timing for acquiring the channel information is, for example, every certain time or a timing at which the determination result by the channel identifying unit 100 is acquired in the above-described steps ST110 and ST125 (Fig. 3). While the communication operation is continued, the first information acquiring unit 101 repeats the process in steps ST200 to ST220 (ST225).

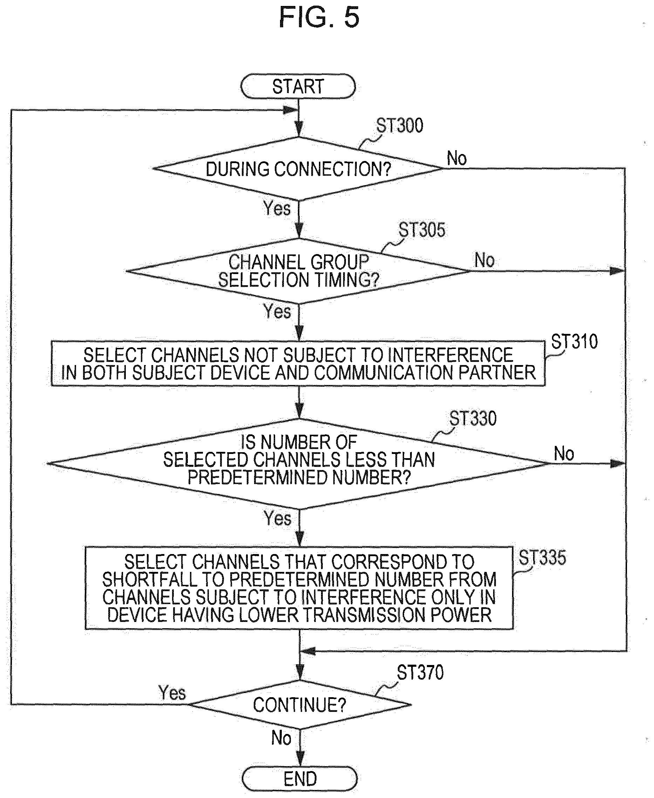

Fig. 5 is a flowchart for describing an example of a process of a channel group selecting step for selecting a group of channels to be used for frequency hopping in the communication device 1.

At a predetermined timing for selecting the group of channels during the connection with the communication device 2 (ST300, ST305), the channel group selecting unit 103 selects channels not subject to interference in both the communication device 1 and the communication device 2 as the group of channels (ST310). That is, on the basis of the determination result by the channel identifying unit 100 in the above-described steps ST110 and ST125 (Fig. 3) and the channel information acquired by the first information acquiring unit 101 in the above-described step ST220 (Fig. 4), the channel group selecting unit 103 selects the non-interference channels in both the communication devices 1 and 2.

The channel group selecting unit 103 counts the number of the non-interference channels selected in step ST310 and determines whether the number reaches 20 (minimum necessary number for frequency hopping) (ST330). If the number of the selected non-interference channels does not reach 20, the channel group selecting unit 103 further selects, as the group of channels, channels that correspond to the shortfall to 20 from the channels subject to interference only in a device having a lower transmission power (only in the communication device 2 in this example) (ST335). Thus, the group of channels has 20 channels in total, including the non-interference channels in both the communication devices 1 and 2 and the channels subject to interference only in the communication device 2. While the communication operation is continued, the channel group selecting unit 103 repeats the process in steps ST300 to ST335 (ST370).

As described above, according to this embodiment, if the number of non-interference channels not subject to interference in both the communication devices 1 and 2 does not reach 20, which is the minimum necessary number for frequency hopping, at least one channel subject to interference only in the communication device 1 or 2 having a lower transmission power is selected as at least a part of the group of channels to be used for frequency hopping. That is, the channel subject to interference only in the device having a lower transmission power is used for communication. The device having a lower transmission power has a larger received signal strength indicator of a radio wave transmitted from the other device than the device having a higher transmission power, and thus is more unlikely to be influenced by interference due to external radio waves or the like. Accordingly, the channel subject to interference only in the device having a lower transmission power is more unlikely to be influenced by external radio waves or the like than a channel subject to interference only in the device having a higher transmission power or a channel subject to interference in both the devices. This makes it unlikely to cause a communication error, communication interruption, or the like, and thereby it is possible to effectively suppress degradation of the communication quality in a case of being subject to interference due to external radio waves or the like.

In addition, according to this embodiment, on the basis of comparison between the transmission power of the communication device 2 indicated by the transmission power information and the transmission power of the communication device 1, the high-and-low relationship of the transmission power between the communication device 1 and the communication device 2 is determined. Thus, even if the high-and-low relationship of the transmission power is changed by a change of the communication device 2, the group of channels can be selected in accordance with the determination result of the high-and-low relationship of the transmission power, and thereby it is possible to suppress degradation of the communication quality in a case of being subject to interference due to external radio waves or the like.

### <Second Embodiment>

Next, a second embodiment of the present invention will be described. In the second embodiment, if the number of group of channels does not reach the predetermined number, the transmission power is controlled to be increased.

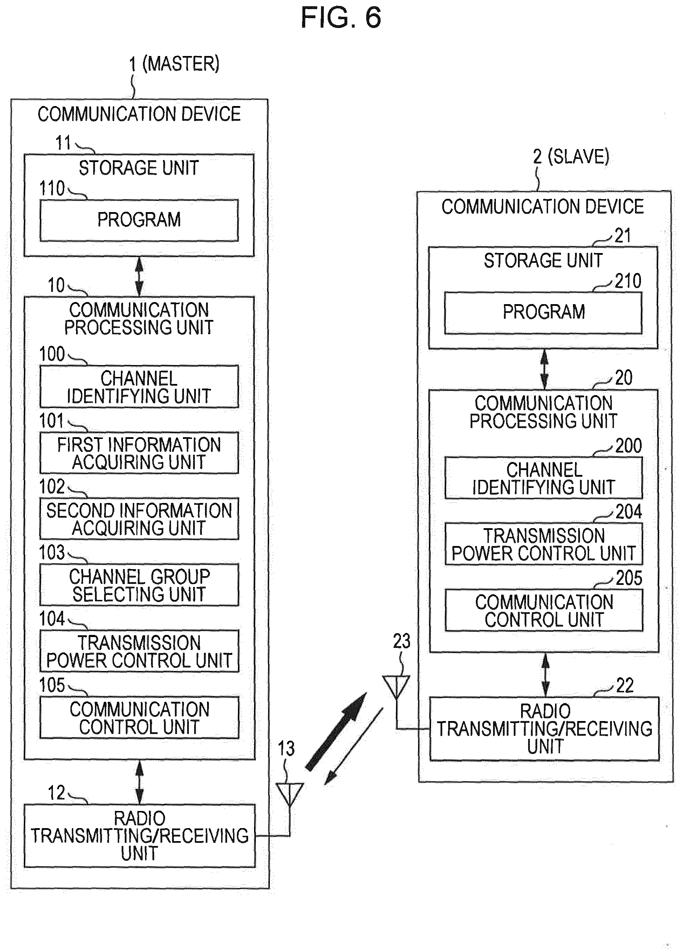

Fig. 6 is a diagram illustrating an example of a configuration of the communication devices 1 and 2 according to the second embodiment. The communication device 1 illustrated in Fig. 6 is obtained by adding a transmission power control unit 104 to the communication processing unit 10 of the communication device 1 illustrated in Fig. 1, and the other configuration is the same as that of the communication device 1 illustrated in Fig. 1. The communication device 2 illustrated in Fig. 6 is obtained by adding a transmission power control unit 204 to the communication processing unit 20 of the communication device 2 illustrated in Fig. 1, and the other configuration is the same as that of the communication device 2 illustrated in Fig. 1. Differences from the communication devices 1 and 2 illustrated in Fig. 1 will mainly be described below.

The transmission power control unit 104 of the communication device 1 controls the transmission power of the communication devices 1 and 2 in accordance with the situation of interference of each channel in the communication devices 1 and 2.

If at least one interference channel subject to interference in the communication device 1 or the communication device 2 is selected by the channel group selecting unit 103 as a part of the group of channels, the transmission power control unit 104 controls the transmission power of the communication device 1 to be increased. For example, by increasing a gain of an output-stage amplifier in the radio transmitting/receiving unit 12, the transmission power control unit 104 increases the transmission power from the antenna 13. In this case, in addition, the transmission power control unit 104 also performs processing of transmitting, to the communication device 2, a control command for increasing the transmission power of the communication device 2. Specifically, the transmission power control unit 104 transmits a command "LMP_Power_Control_Req" for requesting an increase of the transmission power from the communication control unit 105 to the communication device 2.

On the other hand, after the transmission power control unit 104 has controlled the transmission power to be increased, if the interference channel is no longer included in the group of channels selected by the channel group selecting unit 103, the transmission power control unit 104 controls the transmission power of the communication device 1 to be restored. For example, the transmission power control unit 104 decreases the transmission power from the antenna 13 by reducing the gain of the output-stage amplifier in the radio transmitting/receiving unit 12. In addition, in this case, the transmission power control unit 104 also performs processing of transmitting, to the communication device 2, a control command for restoring the transmission power of the communication device 2. Specifically, the transmission power control unit 104 transmits a command "LMP_Power_Control_Req" for requesting a decrease of the transmission power from the communication control unit 105 to the communication device 2.

In accordance with the control command (LMP_Power_Control_Req) transmitted from the communication device 1, the transmission power control unit 204 of the communication device 2 controls the transmission power in the radio transmitting/receiving unit 22. That is, if the control command for requesting an increase of the transmission power is received, the transmission power control unit 204 increases the transmission power from the antenna 23 by increasing the gain of the output stage in the radio transmitting/receiving unit 22. In addition, if the control command for requesting a decrease of the transmission power is received, the transmission power control unit 204 decreases the transmission power from the antenna 23 by decreasing the gain of the output stage in the radio transmitting/receiving unit 22.

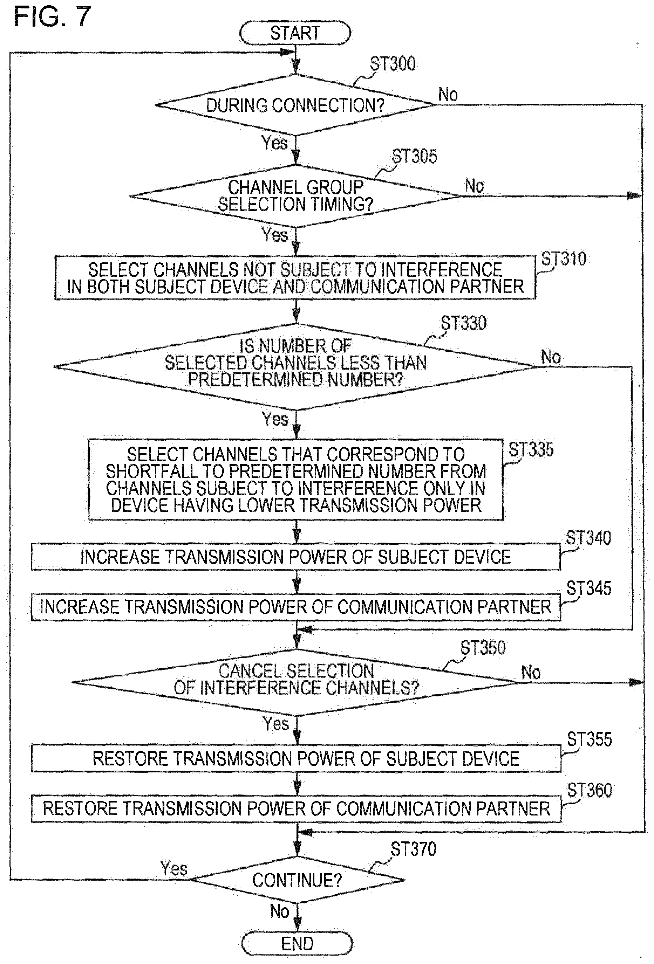

Fig. 7 is a flowchart for describing an example of a process of a channel group selecting step for selecting a group of channels to be used for frequency hopping in the communication device 1 according to the second embodiment and a transmission power control step for controlling the transmission power of at least one of the communication device 1 and the communication device 2 to be increased. The flowchart illustrated in Fig. 7 is obtained by adding step ST340 to step ST360, which correspond to the transmission power control step, to the flowchart illustrated in Fig. 5. Differences from the flowchart illustrated in Fig. 5 will mainly be described below.

If the channel group selecting unit 103 selects interference channels as the group of channels for frequency hopping (ST335), the transmission power control unit 104 controls the transmission power to be increased in the radio transmitting/receiving unit 22 (ST340) and also transmits a control command (LMP_Power_Control_Req) for requesting an increase of the transmission power of the communication device 2 from the communication control unit 105 to the communication device 2 (ST345).

On the other hand, if the channel group selecting unit 103 has selected a new group of channels in step ST310 (ST310), the transmission power control unit 104 determines whether the state where the interference channels are selected as the group of channels for frequency hopping is canceled as a result of the selection (ST350). If the state where the interference channels are selected as the group of channels is canceled, the transmission power control unit 104 controls the transmission power to be restored in the radio transmitting/receiving unit 22 (ST355) and also transmits the control command (LMP_Power_Control_Req) for requesting the transmission power of the communication device 2 to be restored from the communication control unit 105 to the communication device 2 (ST360).

As described above, according to this embodiment, if a channel subject to interference is selected as a part of the group of channels for frequency hopping, by increasing the transmission power of the communication device 1, the received signal strength indicator in the communication device 2 is increased, and thus, the communication device 2 is unlikely to be subject to interference due to external radio waves or the like. In this case, in addition, by increasing the transmission power of the communication device 2, the received signal strength indicator in the communication device 1 is increased, and thus, the communication device 1 is unlikely to be subject to interference due to external radio waves or the like. Thus, it is possible to more effectively suppress degradation of the communication quality in a case of being subject to interference due to external radio waves or the like.

In addition, according to this embodiment, if a channel subject to interference is no longer included in the group of channels for frequency hopping, the transmission power of the communication device 1 or the transmission power of the communication device 2 that has been increased is restored. Thus, as compared with a case where the transmission power remains to be increased, the power consumption of the communication device 1 or the communication device 2 can be reduced. Either the communication device 1 or the communication device 2 may be appropriately selected as a device whose transmission power is to be increased or to be restored in accordance with the situation of the interference wave.

### <Third Embodiment>

Next, a third embodiment of the present invention will be described. In the third embodiment, a channel that is comparatively likely to be influenced by interference among non-interference channels is excluded from the group of channels for frequency hopping.

Although the operations of the channel group selecting unit 103 of the communication device 1 according to this embodiment are different from those of the communication device 1 illustrated in Fig. 1 described above, the other configuration is the same as that of the communication device 1 illustrated in Fig. 1. The communication device 2 according to this embodiment is the same as the communication device 2 illustrated in Fig. 2. Accordingly, different operations of the channel group selecting unit 103 will mainly be described below.

In a case where at least a part of a plurality of channels subject to interference in either the communication device 1 or the communication device 2 having a higher transmission power is continuous as a frequency band (hereinafter this frequency band may also be referred to as "interference frequency band"), the channel group selecting unit 103 in this embodiment excludes channels that are adjacent to the continuous channel from the group of channels for frequency hopping.

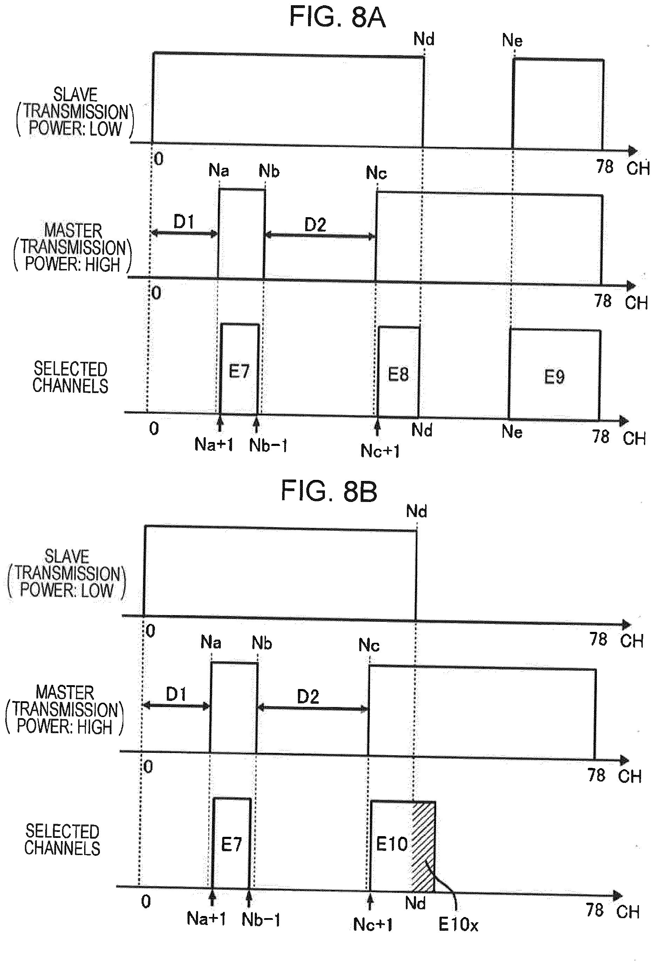

Fig. 8 is a diagram for describing a method of selecting a group of channels to be used for frequency hopping in the communication device 1 according to the third embodiment. Fig. 8A illustrates a case where the number of channels not subject to interference in both the communication device 1 and the communication device 2 exceeds 20 whereas Fig. 8B illustrates a case where the number of these channels does not reach 20.

In the example in Fig. 8A, channel regions D1 and D2 each correspond to the interference frequency band. The interference frequency band is a frequency band subject to interference in the communication device 1 having a higher transmission power (the transmission power of the communication partner is lower/the received signal strength indicator thereof is smaller) and may be subject to interference due to a radio signal of a wireless LAN or the like. Typically, since the radio signal occupies a certain bandwidth, adjacent frequencies are likely to be constantly influenced by the radio signal. Thus, in the example in Fig. 8A, a channel "Na" adjacent to the channel region D1 and channels "Nb" and "Nc" adjacent to the channel region D2 are excluded from the group of channels. That is, in the example in Fig. 8A, as the group of channels, a channel region E7 from which the channels "Na" and "Nb" are excluded, a channel region E8 from which the channel "Nc" is excluded, and a channel region E9 are selected.

On the other hand, in the example in Fig. 8B, since the channel region E8 in Fig. 8A is no longer selected as the group of channels, the number of channels not subject to interference in both the communication device 1 and the communication device 2 is smaller than 20. Thus, in the example in Fig. 8B, the channel region E8 included in the group of channels expands to a channel region E10. A hatched region E10X in Fig. 8A corresponds to this expanded part. The hatched region E10X is a channel subject to interference only in the communication device 2 having a lower transmission power (the transmission power of the communication partner is higher/the received signal strength indicator thereof is larger).

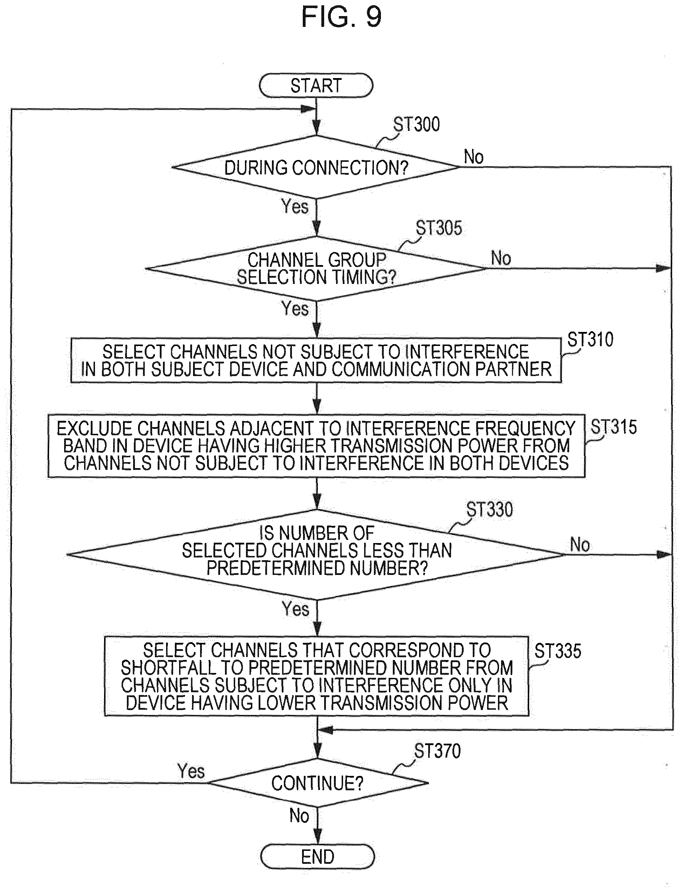

Fig. 9 is a flowchart for describing an example of a process of selecting the group of channels to be used for frequency hopping in the communication device 1 according to the third embodiment. The flowchart illustrated in Fig. 9 is obtained by adding step ST315 to the flowchart illustrated in Fig. 5. Differences from the flowchart illustrated in Fig. 5 will be described below.

If channels not subject to interference in both the communication device 1 and the communication device 2 are selected (ST310), from the channels not subject to interference in both the devices, the channel group selecting unit 103 excludes channels that are adjacent to the interference frequency band in the communication device 1 having a higher transmission power (the transmission power of the communication partner is lower/the received signal strength indicator thereof is smaller) (ST315).

As described above, if at least a part of the plurality of channels subject to interference in the device having a higher transmission power (the transmission power of the communication partner is lower/the received signal strength indicator thereof is smaller) is continuous as the interference frequency band, the interference frequency band may be subject to interference due to a radio signal of a wireless LAN or the like. In this case, channels that are adjacent to the interference frequency band are likely to be constantly influenced by the radio signal or the like. According to this embodiment, by excluding the channels that are adjacent to the interference frequency band from the group of channels, it can be more unlikely to be subject to interference due to a radio signal or the like.

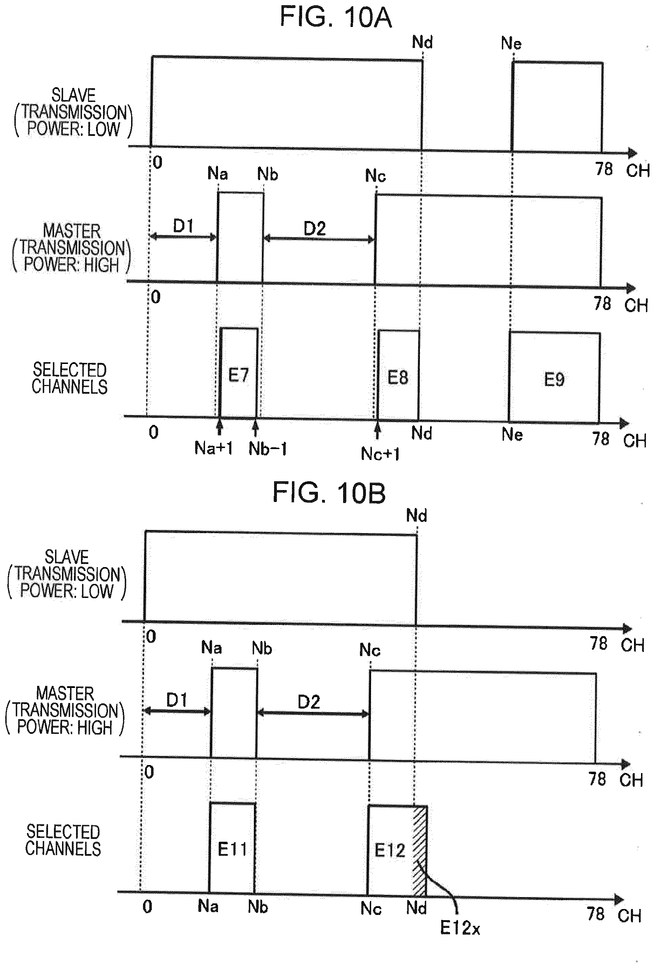

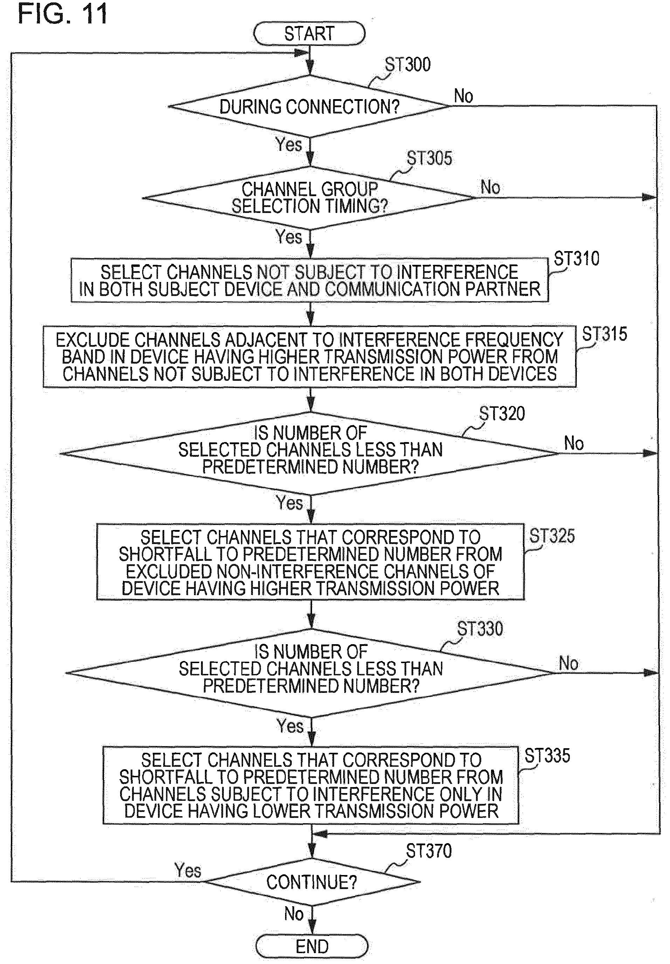

Next, a modification of this embodiment will be described with reference to Figs. 10 and 11.

In this modification, the channel group selecting unit 103 selects the group of channels in accordance with a criterion different from that in the above-described embodiment, in a case where the number of channels not subject to interference in both the communication device 1 and the communication device 2 does not reach 20. That is, in this case, the channel group selecting unit 103 selects non-interference channels not subject to interference in both the communication device 1 and the communication device 2, which are adjacent to the interference frequency band, as the group of channels, more preferentially than a channel subject to interference in one or both of the communication device 1 and the communication device 2.

Fig. 10 is a diagram for describing the modification of the method of selecting a group of channels to be used for frequency hopping in the communication device 1 according to the third embodiment. Fig. 10A illustrates a case where the number of channels not subject to interference in both the communication device 1 and the communication device 2 exceeds 20 whereas Fig. 10B illustrates a case where the number of channels does not reach 20.

The state illustrated in Fig. 10A is the same as the state illustrated in Fig. 8A described above. If the channel region E9 is no longer selected as the group of channels in this state, in the example in Fig. 8B, while the channels "Na", "Nb", and "Nc" are excluded from the group of channels, the channel region E8 expands to the channel region E10. However, since the channels "Na", "Nb", and "Nc" are not subject to interference in both the communication device 1 and the communication device 2, it is assumed that the channels "Na", "Nb", and "Nc" are more unlikely to be subject to the influence of interference than the hatched region E10X subject to interference in the communication device 2. Thus, in this modification, as illustrated in Fig. 10B, the channels "Na", "Nb", and "Nc" are added to channel ranges E11 and E12 that are selected as the group of channels. The interference channels (hatched range E12x) selected as the group of channels are reduced for the added channels.

Fig. 11 is a flowchart for describing the modification of the process of selecting the group of channels to be used for frequency hopping in the communication device 1 according to the third embodiment. The flowchart illustrated in Fig. 11 is obtained by adding step ST320 to step ST325 to the flowchart illustrated in Fig. 9. Differences from the flowchart illustrated in Fig. 9 will mainly be described below.

If the non-interference channels that are adjacent to the interference frequency band in the communication device 1 having a higher transmission power are excluded from a selection target of the group of channels in step ST315, the channel group selecting unit 103 determines whether the number of selected non-interference channels after exclusion reaches 20 (minimum necessary number for frequency hopping) (ST320). If the number of selected non-interference channels after exclusion does not reach 20, from the non-interference channels that have been excluded from the selection target in step ST315, the channel group selecting unit 103 selects again the non-interference channels that correspond to the shortfall to 20 (ST325). Then, the channel group selecting unit 103 further determines whether the number of selected non-interference channels reaches 20 (ST330). If the number of selected non-interference channels still does not reach 20, through the above-described processing in step ST335, the channel group selecting unit 103 selects channels that correspond to the shortfall to 20 from channels subject to interference only in the device having a lower transmission power (only in the communication device 2 in this example).

According to this modification, if the number of channels not subject to interference in both the communication device 1 and the communication device 2 does not reach 20, non-interference channels that are adjacent to the interference frequency band are selected as the group of channels more preferentially than a channel subject to interference in the communication device 1 or the communication device 2. Although the non-interference channels that are adjacent to the interference frequency band may be influenced by a radio signal of a wireless LAN or the like, since the non-interference channels are determined as not being subject to interference in both the communication device 1 and the communication device 2, the degree of interference is comparatively small. Thus, by selecting the non-interference channels that are adjacent to the interference frequency band as the group of channels more preferentially, it is possible to suppress degradation of the communication quality as a result of the influence of interference.

Some of the embodiments of the present invention have been described above. However, the present invention is not limited to the above embodiments and includes variations.

For example, the above embodiments have described an example of performing communication by using frequency hopping. However, in another embodiment of the present invention, communication may be performed by using another scheme of using a plurality of channels to which different frequencies are allocated.

In addition, the above embodiments have described an example of applying the present invention to communication conforming to the Bluetooth (registered trademark) communication standard. However, the present invention is also applicable to other various communication standards.

### Reference Signs List

- 1: communication device
- 10: communication processing unit
- 100: channel identifying unit
- 101: first information acquiring unit
- 102: second information acquiring unit
- 103: channel group selecting unit
- 104: transmission power control unit
- 105: communication control unit
- 11: storage unit
- 110: program
- 12: radio transmitting/receiving unit
- 13: antenna
- 2: communication device
- 20: communication processing unit
- 200: channel identifying unit
- 204: transmission power control unit
- 205: communication control unit
- 21: storage unit
- 210: program
- 22: radio transmitting/receiving unit
- 23: antenna

## Claims

1. A communication device that performs communication by using a group of channels to which different frequency bands are allocated, the communication device comprising:
a channel identifying unit that identifies the channel not subject to interference in a subject device, among a plurality of the channels that are available for communication;
a first information acquiring unit that acquires channel information about the channel not subject to interference in a communication partner; and
a channel group selecting unit that selects, as the group of channels, a predetermined number of the channels or more on the basis of the channel identified by the channel identifying unit and the channel information acquired by the first information acquiring unit,
wherein the channel group selecting unit selects at least one of the channels not subject to interference in both the subject device and the communication partner as at least a part of the group of channels and, if the number of the channels not subject to interference in both the subject device and the communication partner does not reach the predetermined number, further selects at least one of the channels subject to interference only in the subject device or the communication partner having a lower transmission power, as at least a part of the group of channels.

2. The communication device according to claim 1, further comprising:
a second information acquiring unit that acquires transmission power information about the transmission power of the communication partner,
wherein, on the basis of comparison between the transmission power of the communication partner indicated by the transmission power information and the transmission power of the subject device, the channel group selecting unit determines a high-and-low relationship of the transmission power between the subject device and the communication partner.

3. The communication device according to claim 1 or 2, further comprising:
a transmission power control unit that performs control to increase the transmission power of at least one of the subject device and the communication partner if the at least one of the channels subject to interference is selected by the channel group selecting unit as a part of the group of channels.

4. The communication device according to claim 3,
wherein, if, after the control has been performed to increase the transmission power, the channel subject to interference is no longer included in the group of channels selected by the channel group selecting unit, the transmission power control unit performs control to restore the transmission power of the at least one of the subject device and the communication partner.

5. The communication device according to any one of claims 1 to 4,
wherein, if at least a part of a plurality of channels subject to interference in the subject device or the communication partner having a higher transmission power is continuous as a frequency band, the channel group selecting unit excludes the channels that are adjacent to the continuous channel from the group of channels.

6. The communication device according to claim 5,
wherein, if the number of the channels not subject to interference in both the subject device and the communication partner does not reach the predetermined number, the channel group selecting unit selects the channels that are adjacent, more preferentially than the channel subject to interference in the subject device or the communication partner.

7. The communication device according to any one of claims 1 to 6, further comprising:
a communication control unit that sets an order of the group of channels and performs control to switch the channels to be used for communication in accordance with the set order in every predetermined time.

8. A communication method performed by a communication device that performs communication by using a group of channels to which different frequency bands are allocated, the communication method comprising:
a channel identifying step of identifying the channel not subject to interference in a subject device, among a plurality of the channels that are available for communication;
a first information acquiring step of acquiring channel information about the channel not subject to interference in a communication partner; and
a channel group selecting step of selecting, as the group of channels, a predetermined number of the channels or more on the basis of the channel identified in the channel identifying step and the channel information acquired in the first information acquiring step,
wherein, in the channel group selecting step, at least one of the channels not subject to interference in both the subject device and the communication partner is selected as at least a part of the group of channels and, if the number of the channels not subject to interference in both the subject device and the communication partner does not reach the predetermined number, at least one of the channels subject to interference only in the subject device or the communication partner having a lower transmission power is further selected as at least a part of the group of channels.

9. The communication method according to claim 8, further comprising:
a second information acquiring step of acquiring transmission power information about the transmission power of the communication partner,
wherein, on the basis of comparison between the transmission power of the communication partner indicated by the transmission power information and the transmission power of the subject device, in the channel group selecting step, a high-and-low relationship of the transmission power between the subject device and the communication partner is determined.

10. The communication method according to claim 8 or 9, further comprising:
a transmission power control step of performing control to increase the transmission power of at least one of the subject device and the communication partner if the at least one of the channels subject to interference is selected as a part of the group of channels in the channel group selecting step.

11. The communication method according to any one of claims 8 to 10,
wherein, if at least a part of a plurality of channels subject to interference in the subject device or the communication partner having a higher transmission power is continuous as a frequency band, in the channel group selecting step, the channels that are adjacent to the continuous channel is excluded from the group of channels.

12. A program causing a computer to execute the communication method according to any one of claims 8 to 11.
